# FASCICULE DE BREVET EUROPEEN

(11) **EP 2 785 515 B1**
(45) Date de publication et mention de la délivrance du brevet: **03.02.2016**
(21) Numéro de dépôt: 12808856.4
(22) Date de dépôt: 22.11.2012
(51) Int. Cl.: B29D 30/00, B60C 23/04

(54) **ENSEMBLE ELECTRONIQUE DESTINE A ETRE INTEGRE DANS UN PNEUMATIQUE**
ELEKTRONISCHE BAUGRUPPE ZUR INSTALLATION IN EINEM REIFEN
ELECTRONIC ASSEMBLY FOR INSTALLATION IN A TIRE

(30) Priorité: 02.12.2011 FR 1161107
(43) Date de publication de la demande: 08.10.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BATTOCCHIO, Claudio, F-63040 Clermont-Ferrand Cedex 9 (FR)
(74) Mandataire: Dequire, Philippe Jean-Marie Denis
(86) Numéro de dépôt international: PCT/FR2012/052701
(87) Numéro de publication internationale: WO 2013/079854

(56) Documents cités:
- EP-A1- 2 223 814
- EP-A2- 1 085 046
- EP-A2- 1 439 079
- US-A1- 2009 151 828

## Description

L'invention concerne le domaine des pneumatiques, en particulier des dispositifs électroniques destinés à être intégrés dans un pneumatique. L'invention s'applique à tout type de pneumatique.

On connaît de l'état de la technique, notamment de EP2223814 en accord avec les préambules respectifs des revendications 1 et 10, et US2009/151828, un pneumatique comprenant un dispositif électronique. Le dispositif électronique comprend un organe électronique comprenant une puce électronique fixée sur un support et une antenne comprenant deux brins disposés de chaque côté de l'organe électronique et soudés sur le support de façon à assurer une liaison mécanique et électrique entre chaque brin et le support. Chaque brin comprend une partie libre par rapport au support jointif avec une partie de fixation du brin sur le support. Le dispositif électronique est intégré dans le pneumatique, en l'espèce noyé dans de la gomme.

L'antenne présente une forme hélicoïdale et une raideur telle qu'elle suit les déformations de la gomme du pneumatique en roulage. Au contraire, l'organe électronique présente une forme générale parallélépipédique et une raideur bien supérieure à celle de la gomme adjacente au dispositif électronique et si bien qu'il ne suit pas les déformations de la gomme adjacente.

En raison de la différence des déformations entre l'antenne et l'organe électronique, la jonction entre les parties libre et de fixation présente des risques élevés de cassure sous l'effet des contraintes induites par la déformation du pneumatique en roulage.

Une première solution consiste à créer un gradient du module d'élasticité entre la jonction et la gomme adjacente de façon à réduire la différence des déformations et à supprimer les risques de cassure de la jonction. On revêt donc le dispositif électronique de plusieurs couches, chaque couche présentant un module d'élasticité différent. Toutefois, cette solution engendre un coût relativement élevé, des problèmes d'adhésion des différentes couches entre elles et des problèmes de compatibilité des matériaux des différentes couches.

Une deuxième solution consiste à supprimer la fixation par soudure de chaque brin sur le support et à la remplacer par une fixation du type capacitive, c'est-à-dire sans contact galvanique entre l'antenne et le support. Toutefois, cette solution engendre, lorsque le dispositif est de type RFID (conformément au sigle anglo-saxon « Radio Frequency Identification Device ») une détérioration du fonctionnement radio-fréquence du dispositif, des difficultés à maîtriser la distance entre le support et chaque brin et des variations dans le temps des performances radio-fréquence en raison de l'évolution dans le temps des propriétés magnétiques de la gomme.

L'invention a pour but de supprimer, pour le moins de réduire, les risques de cassure de la jonction entre les parties libre et de fixation de l'antenne.

A cet effet l'invention a pour objet un ensemble électronique destiné à être intégré dans un pneumatique, comprenant :
- un dispositif électronique muni d'un organe électronique et d'au moins une antenne fixée sur un support de l'organe électronique, l'antenne comprenant une partie libre par rapport au support jointive avec une partie de fixation de l'antenne sur le support, et
- une couche, dite de transition, comprenant une composition comprenant un élastomère et 9 à 13 parties de soufre pour cent parties en poids d'élastomère et revêtant au moins la jonction entre les parties libre et de fixation de l'antenne.

La composition permet d'assurer une transition continue entre une zone de fort module d'élasticité, ici la jonction entre les parties libre et de fixation de l'antenne, et une zone de faible module d'élasticité, ici la gomme adjacente enrobant la couche de transition. En effet, lors de la vulcanisation de l'ébauche crue, le soufre migre dans la gomme adjacente, généralement plus pauvre en soufre que la gomme de la couche de transition. On génère ainsi un gradient du module d'élasticité entre la zone rigide et la zone souple. La gomme adjacente enrobant la couche de transition peut être l'une quelconque des gommes du bourrelet du pneumatique, tel un bourrage tringle, d'un renfort intérieur ou d'une nappe carcasse ou plusieurs de ces gommes.

Le soufre permet d'assurer le passage du caoutchouc entre son état plastique à son état élastique lors de la vulcanisation. Plus la teneur en soufre est élevée, plus la gomme vulcanisée obtenue est rigide. En raison du taux de soufre de la composition relativement élevé par rapport au taux de soufre de la gomme adjacente, le soufre migre par diffusion lors de la vulcanisation pour créer le gradient du module d'élasticité recherché.

A titre d'exemple, le module MA10 de la gomme vulcanisée située au contact de la zone rigide est compris entre 35 MPa et 70 MPa et le module MA10 de la gomme vulcanisée située entre 0,5 mm et 1 mm de la zone rigide est compris entre 2 et 5 MPa. Le module MA10 est, pour une gomme donnée, la valeur de la contrainte de traction nécessaire pour un allongement relatif de 10% de cette gomme.

Contrairement à la première solution de l'état de la technique, la composition selon l'invention permet d'éviter les inconvénients liés à l'utilisation de plusieurs couches. Contrairement à la seconde solution de l'état de la technique, la composition selon l'invention permet de conserver le contact galvanique entre le support et chaque brin et donc de conserver de bonnes performances radio-fréquence du dispositif.

La composition comprend avantageusement un élastomère, de préférence diénique. L'élastomère est de type saturé ou insaturé. On entend par élastomère diénique insaturé un élastomère diénique issu au moins en partie de monomères diènes conjugués et ayant un taux d'unités issus de diènes conjugués qui est supérieur à 30% (% en moles), de préférence 50%. Un tel élastomère diénique est préférentiellement choisi dans le groupe constitué par les polybutadiènes (BR), le caoutchouc naturel (NR), les polyisoprènes de synthèse (IR), les copolymères de butadiènes, les copolymères d'isoprène et les mélanges de tels élastomères. L'élastomère diénique insaturé est plus avantageusement un élastomère isoprénique, de préférence choisi dans le groupe constitué par le caoutchouc naturel, les polyisoprènes de synthèse et les mélanges de tels élastomères.

De préférence, la composition comprend une résine.

La résine est du type hydrocarbonée et est choisie dans le groupe constitué par les résines d'homopolymère ou copolymère de cyclopentadiène (CPD) ou dicyclopentadiène (DCPD), les résines d'homopolymère ou copolymère terpène, les résines d'homopolymère ou copolymère de coupe C5, et les mélanges de ces résines. Parmi les résines copolymères ci-dessus, la résine hydrocarbonée est avantageusement choisie dans le groupe constitué par les résines de copolymère CPD/vinylaromatique, les résines de copolymère DCPD/vinylaromatique, les résines de copolymère CPD/terpène, les résines de copolymère DCPD/terpène, les résines de copolymère CPD/coupe C5, les résines de copolymère DCPD/coupe C5, les résines de copolymère terpène/vinylaromatique, les résines de copolymère coupe C5/vinylaromatique et les mélanges de ces résines.

Avantageusement, la composition comprend 3 à 14 parties d'huile pour cent parties en poids d'élastomère.

L'huile est un additif permettant d'assurer la plasticité de la gomme crue ce qui facilite la fabrication, notamment le mélangeage, de la composition. L'huile permet également d'assurer l'élasticité de la gomme vulcanisée, ce qui permet à la composition vulcanisée de se déformer sous l'effet des contraintes induites par la déformation du pneumatique en roulage.

L'huile est choisie dans le groupe constitué par les huiles polyoléfiniques, les huiles naphténiques, les huiles paraffiniques, les huiles DAE (Distillate Aromatic Extracts), les huiles MES (Medium Extracted Extracts), les huiles TDAE (Treated Distillate Aromatic Extracts), les huiles minérales et les huiles végétales.

L'huile et la résine permettent d'ajuster les propriétés de la couche de transition, comme par exemple, la valeur maximale du module d'élasticité après vulcanisation ou bien encore l'amplitude du gradient du module d'élasticité entre la composition et le mélange adjacent du pneumatique après vulcanisation.

La composition peut également comprendre une charge renforçante. On utilise préférentiellement du noir de carbone. Cependant le noir de carbone peut bien entendu être utilisé en coupage avec d'autres charges renforçantes et en particulier des charges inorganiques, par exemple, la silice.

Plus particulièrement, comme noirs de carbone conviennent tous les noirs de carbone, notamment les noirs du type HAF, ISAF, SAF, conventionnellement utilisés dans les pneumatiques et particulièrement dans les bandes de roulement des pneumatiques. A titre d'exemples non limitatifs de tels noirs, on peut citer les noirs NI15, N134, N234, N330, N339, N347, N375.

Dans le cas de l'utilisation d'une silice, on utilise de préférence une silice précipitée hautement dispersible, en particulier lorsque l'invention est mise en oeuvre pour la fabrication de pneumatiques présentant une faible résistance au roulement. Comme exemples non limitatifs de telles silices hautement dispersibles préférentielles, on peut citer les silices Ultrasil 7000 et Ultrasil 7005 de la société Degussa, les silices Zeosil 1165MP, 1135MP et Il 15MP de la société Rhodia, la silice Hi-Sil EZ150G de la société PPG, les silices Zeopol 8715, 8745 et 8755 de la Société Huber, des silices précipitées traitées telles que par exemple les silices "dopées" à l'aluminium décrites dans la demande EP-A-0735088.

La composition peut également comprendre un agent de couplage. On rappelle ici que par "agent de couplage" on entend, de manière connue, un agent apte à établir une liaison suffisante, de nature chimique et/ou physique, entre la charge renforçante et l'élastomère. Des agents de couplage, notamment silice/élastomère ont été décrits dans un très grand nombre de documents, les plus connus étant des organosilanes bifonctionnels porteurs de fonctions alkoxyle.

A la charge renforçante peuvent être également ajoutées, selon l'application visée, des charges inertes (non renforçantes) telles que particules d'argile, bentonite, talc, craie, kaolin, utilisables par exemple dans des flancs ou des bandes de roulement de pneumatiques colorés.

La composition peut comporter tout ou partie des additifs usuels habituellement utilisés dans les compositions destinées à la fabrication de pneumatiques, comme par exemple des plastifiants, que ces derniers soient de nature aromatique ou non-aromatique, des pigments, des agents de protection tels que cires anti-ozone, anti-ozonants chimiques, anti-oxydants, par exemple le N-(1,3-diméthylbutyl)-N'-phényl-P-phénylènediamine (6-PPD), des agents anti-fatigue, des accepteurs ou des donneurs de méthylène ayant une fonction de durcisseur (par exemple HMT ou H3M) tels que décrits par exemple dans la demande WO02/10269 (ou US2003-0212185), des promoteurs d'adhésion, par exemple des sels de cobalt.

La composition peut également comprendre un accélérateur de vulcanisation, en particulier un accélérateur du type sulfénamide, tel que choisi dans le groupe constitué par disulfure de 2-mercaptobenzothiazyle (MBTS), N-cyclohexyl-2-benzothiazyle sulfénamide (CBS), N,N-dicyclohexyl-2-benzothiazyle sulfénamide (DCBS), N-ter-butyl-2-benzothiazyle sulfénamide (TBBS), N-ter-butyl-2-benzothiazyle sulfénimide (TBSI) et les mélanges de ces composés.

De préférence, la couche de transition est constituée de la composition.

Avantageusement, la couche de transition est électriquement isolante. Ainsi, on garantit un bon fonctionnement radio-fréquence du dispositif.

De façon optionnelle, la couche de transition revêt la totalité de l'antenne.

En raison des propriétés radio-fréquence liées aux propriétés diélectriques de la gomme adjacente, il est préférable de revêtir entièrement chaque brin de l'antenne.

Avantageusement, l'ensemble comprend une couche d'adhérence intercalée entre le dispositif électronique et la couche de transition.

La couche d'adhérence permet d'améliorer la tenue de la couche de transition sur le dispositif électronique. En effet, la couche de transition n'adhère pas facilement sur des matériaux hétérogènes tels qu'une résine époxy, l'étain d'une soudure, le cuivre d'une piste ou le plastique de certains composants du dispositif électronique.

De préférence, l'épaisseur moyenne de la couche de transition est comprise entre 1 mm et 1,5 mm et de préférence entre 1 mm et 1,2 mm.

Cet intervalle d'épaisseurs permet d'éviter tout court-circuit avec la gomme adjacente conductrice du pneumatique, de garantir un bon fonctionnement radio-fréquence du dispositif et enfin d'améliorer la transition de rigidité.

Dans un mode de réalisation, l'ensemble est séparé d'une ébauche crue du pneumatique ou du pneumatique.

L'invention a également pour objet une ébauche crue de pneumatique comprenant un ensemble tel que défini ci-dessus.

L'invention a encore pour objet un pneumatique comprenant :
- un dispositif électronique muni d'un organe électronique et d'au moins une antenne fixée sur un support de l'organe électronique, l'antenne comprenant une partie libre par rapport au support jointive avec une partie de fixation de l'antenne sur le support, et
- une couche, dite de transition revêtant au moins la jonction entre les parties libre et de fixation de l'antenne et présentant un gradient du taux en soufre.

Dans le pneumatique vulcanisé, la couche de transition présente donc un gradient du module d'élasticité sur son épaisseur. Le taux de soufre de la couche correspond au nombre de parties de soufre pour cent parties en poids d'élastomère (pce) de la couche.

L'invention sera mieux comprise à la lecture de la description qui va suivre, donnée uniquement à titre d'exemple et faite en se référant aux dessins dans lesquels:
- la figure 1 est une vue en perspective d'un ensemble selon l'invention ;
- la figure 2 est une vue en coupe selon le plan A-A de l'ensemble de la figure 1 ;
- la figure 3 est une vue en perspective d'un organe électronique et d'une antenne de l'ensemble de la figure 1 ;
- la figure 4 est une vue de détail en perspective d'un dispositif électronique de l'ensemble de la figure 1 ;
- la figure 5 illustre des courbes de variation du module d'élasticité de masses de gomme enrobant le dispositif électronique de la figure 4 dans le cas de cuissons séparées et simultanées des différentes couches d'enrobage du dispositif.

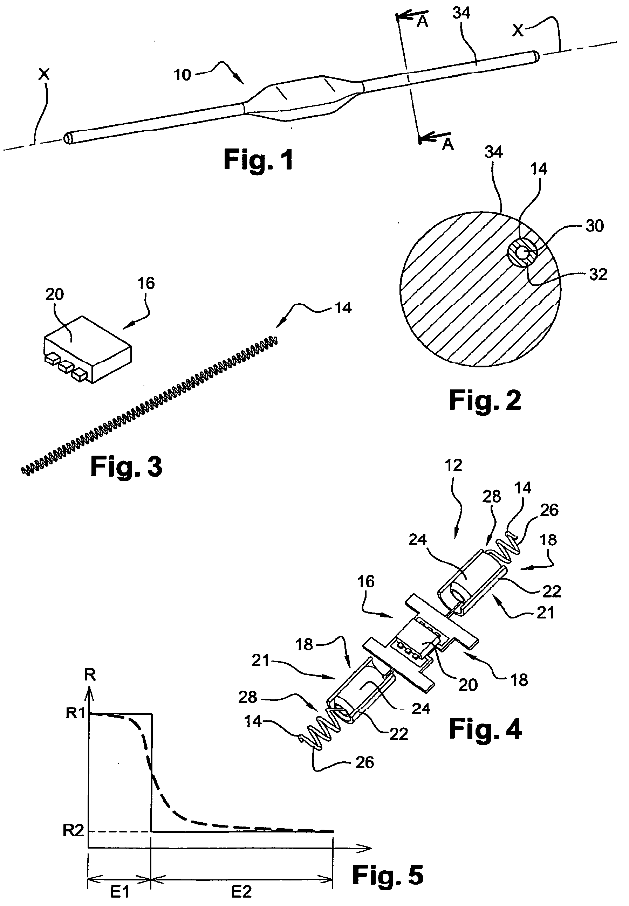

On a représenté sur les figures 1 à 4 un ensemble selon l'invention désigné par la référence générale 10 et destiné à être intégré dans un pneumatique, par exemple en étant noyé dans une masse de gomme du pneumatique. L'ensemble 10 est séparé du pneumatique et présente une forme générale allongée selon un axe X. Dans l'exemple représenté, l'ensemble 10 comprend un dispositif électronique 12 de type RFID (conformément au sigle anglo-saxon « Radio Frequency Identification Device »).

Le dispositif 12 comprend deux brins 14 d'antenne et un organe électronique 16. Le dispositif électronique 12 comprend également un support 18 portant une puce 20 de l'organe électronique 16. Le support 18 forme une platine de circuit imprimé sur laquelle est montée la puce 20, ici un transpondeur à identification par radiofréquence passif.

Le support 18 comprend des moyens 21 de fixation mécanique et de liaison électrique entre chaque brin 14 et le support 18. Les moyens 21 comprennent deux goulottes 22 de fixation de chaque brin 14. Chaque brin 14 comprend une partie 24 de fixation au support 18 soudée dans la goulotte 22. Chaque brin 14 comprend également une partie 26 libre par rapport au support 18 jointive en 28 avec la partie de fixation 24. Chaque brin 14 présente une forme sensiblement hélicoïdale autour de l'axe X et présente une longueur, un diamètre extérieur et un pas d'hélice définis en fonction des conditions d'utilisation du dispositif électronique. Les deux brins 14 constituent une antenne dipôle.

En référence à la figure 2, chaque brin 14 comprend une âme 30 en acier présentant un diamètre externe égal à 203 micromètres plus ou moins 5 micromètres. L'âme 30 pourra être revêtue d'une ou plusieurs couches de conduction et/ou d'isolation chimique et/ou d'adhésion. Dans l'exemple décrit, chaque brin 14 est revêtu d'une couche 32 d'adhésion revêtant directement l'âme 30. La couche 32 comprend un adhésif non métallique, en l'espèce un adhésif commercialisé sous les marques « Chemlok » par la société LORD CORPORATION ou « Chemosil » par la société HENKEL.

L'ensemble 10 comprend également une couche 34 de transition entre le dispositif 12 et la gomme adjacente. La couche de transition 34 revêt directement la couche d'adhésion 32. Ainsi, la couche d'adhésion 32 est intercalée entre le dispositif électronique 12 et la couche de transition 34. En variante, la couche de transition 34 revêt directement l'âme 30. La partie de la couche de transition 34 enrobant l'organe électronique 16 et le support 18 présente une forme générale ovoïde ou en amande.

La couche 34 est électriquement isolante et comprend une composition comprenant au moins un élastomère. Concernant les aspects plus particulièrement liés à l'invention, la composition de la couche 34 comprend 9 à 13 parties de soufre pour cent parties en poids d'élastomère. La composition comprend également 3 à 14 parties d'huile pour cent parties en poids d'élastomère. En l'espèce, la couche 34 est constituée de la composition qui forme une gomme crue. On donne dans le tableau 1 ci-dessous la composition de la couche 34 à titre d'exemple.

**Tableau 1 : composition de la couche 34**

| Constituants | Composition de la couche 34 |
|---|---|
| Caoutchouc naturel | 100 |
| Noir de carbone | 14 |
| Anti-oxydant | 1,5 |
| Huile | 3 |
| Colophane | 3 |
| Résine | 15 |
| Diphenlylolpropane | 7 |
| Promoteur d'adhésion | 3 |
| Oxyde de Zinc | 8,5 |
| Acide stéarique | 0,6 |
| Durcisseur | 7,35 |
| Soufre | 10 |
| Accélérateur | 3,1 |
| Silice | 65 |
| Agent de couplage | 10,4 |

Les couches 32 et 34 revêtent la totalité du dispositif 12. En variante, les couches 32 et 34 ne revêtent que partiellement le dispositif 12, en particulier la jonction 28 entre la partie de fixation 24 et la partie libre 26 de chaque brin 14.

Les couches 32 et 34 sont crues, c'est-à-dire non vulcanisées. La couche 32 présente une épaisseur moyenne comprise entre 10 et 20 µm. La couche 34 est formée à partir de deux bandes de gomme ou skims entre lesquelles le dispositif 12 est intercalé. Chaque bande présente une épaisseur moyenne E1 comprise entre 1 mm et 1,5 mm, de préférence entre 1 mm et 1,2 mm de sorte que l'épaisseur totale de la couche 34, d'un bord libre à l'autre, présente une épaisseur moyenne 2xE1 comprise entre 2 mm et 3 mm, de préférence entre 2 mm et 2,4 mm.

Une fois intégré au pneumatique, l'ensemble 10 permet de supprimer les risques de cassure de la jonction 28. L'ensemble 10 est enrobé dans une gomme adjacente d'une ébauche crue du pneumatique puis vulcanisé avec l'ébauche.

On a représenté sur la figure 5 les variations du module de rigidité d'une première masse de gomme vulcanisée enrobant un dispositif analogue à celui des figures 1 à 4 en fonction de la distance radiale par rapport à l'axe X (courbe en traits continus). La première masse de gomme vulcanisée comprend une couche de gomme de transition, riche en soufre, et une couche de gomme adjacente, moins riche en soufre, dans laquelle l'ensemble comprenant le dispositif et la couche de gomme de transition vulcanisée est intégré. Les couches de transition et adjacente sont vulcanisées séparément.

La couche de gomme vulcanisée de transition présente une épaisseur moyenne E1 et un module de rigidité R1. La couche de gomme vulcanisée adjacente présente une épaisseur moyenne E2 et un module d'élasticité R2 inférieur à R1. La variation du module d'élasticité de la première masse de gomme présente la forme d'un créneau. Ainsi, la variation du module d'élasticité est brutale et le risque de cassure de chaque brin 14 sous l'effet des contraintes induites par la déformation du pneumatique en roulage est élevé.

On a également représenté sur la figure 5 les variations du module d'élasticité d'une deuxième masse de gomme vulcanisée enrobant le dispositif des figures 1 à 4 en fonction de la distance radiale par rapport à l'axe X (courbe en traits pointillés). La deuxième masse de gomme appartient à un pneumatique vulcanisé selon l'invention. On a fabriqué le pneumatique selon l'invention en vulcanisant une ébauche crue comprenant l'ensemble 10 comprenant la couche de gomme crue 34 enrobée d'une couche de gomme crue adjacente. La gomme crue de la couche 34 comprend un taux de soufre, ici compris entre 9 à 13 parties de soufre pour cent parties en poids d'élastomère, supérieur au taux de soufre de la gomme crue de la couche adjacente, ici inférieur à 5 parties de soufre pour cent parties en poids d'élastomère. Les couches de transition et adjacente sont vulcanisées simultanément.

La variation du module d'élasticité présente ici la forme d'une courbe continue avec une décroissance régulière. Lors de la vulcanisation, le soufre diffuse à l'interface formée par la couche 34 et la couche de gomme adjacente. Ainsi, sur l'épaisseur E1, le taux de soufre, et donc le module d'élasticité, de la couche 34 diminue au fur et à mesure que l'on se rapproche de l'interface. Sur l'épaisseur E2, le taux de soufre, et donc le module d'élasticité, de la couche 34 augmente au fur et à mesure que l'on se rapproche de l'interface.

La deuxième masse de gomme, notamment la couche de transition 34, présente donc un gradient du taux en soufre, en l'espèce un gradient négatif du taux en soufre lorsqu'on s'éloigne de l'axe X. Cela entraîne donc un gradient correspondant du module d'élasticité.

L'invention ne se limite pas au mode de réalisation précédemment décrit.

## Revendications

1. Ensemble (10) électronique destiné à être intégré dans un pneumatique, comprenant :
- un dispositif électronique (12) muni d'un organe électronique (16) et d'au moins une antenne (14) fixée sur un support (18) de l'organe électronique (16), l'antenne (14) comprenant une partie libre (26) par rapport au support (18) jointive avec une partie (24) de fixation de l'antenne (14) sur le support (18), et
- une couche (34), dite de transition,
l'ensemble (10) étant **caractérisé en ce que** la couche de transition (34) comprend une composition comprenant un élastomère et 9 à 13 parties de soufre pour cent parties en poids d'élastomère et revêtant au moins la jonction (28) entre les parties libre (26) et de fixation (24) de l'antenne (14).

2. Ensemble (10) selon la revendication 1, dans lequel la composition comprend une résine.

3. Ensemble (10) selon la revendication 1 ou 2, dans lequel la composition comprend 3 à 14 parties d'huile pour cent parties en poids d'élastomère.

4. Ensemble (10) selon l'une quelconque des revendications précédentes, dans lequel la couche de transition (34) est constituée de la composition.

5. Ensemble (10) selon l'une quelconque des revendications précédentes, dans lequel la couche de transition (34) revêt la totalité de l'antenne (14).

6. Ensemble (10) selon l'une quelconque des revendications précédentes, comprenant une couche d'adhérence (32) intercalée entre le dispositif électronique (12) et la couche de transition (34).

7. Ensemble (10) selon l'une quelconque des revendications précédentes, dans lequel l'épaisseur moyenne de la couche de transition (34) est comprise entre 1mm et 1,5 mm et de préférence entre 1 mm et 1,2 mm.

8. Ensemble (10) selon l'une quelconque des revendications précédentes, séparé d'une ébauche crue du pneumatique ou du pneumatique.

9. Ebauche crue de pneumatique, **caractérisée en ce qu'**elle comprend un ensemble (10) selon l'une quelconque des revendications 1 à 7.

10. Pneumatique, comprenant :
- un dispositif électronique (12) muni d'un organe électronique (16) et d'au moins une antenne (14) fixée sur un support (18) de l'organe électronique (16), l'antenne (14) comprenant une partie libre (26) par rapport au support (18) jointive avec une partie (24) de fixation de l'antenne (14) sur le support (18), et
- une couche (34), dite de transition revêtant au moins la jonction (28) entre les parties libre (26) et de fixation (24) de l'antenne (14),
le pneumatique étant **caractérisé en ce que** la couche de transition (34) présente un gradient du taux en soufre.

## Patentansprüche

1. Elektronische Einheit (10), die dazu bestimmt ist, in einen Luftreifen eingebaut zu werden, die enthält:
- eine elektronische Vorrichtung (12), die mit einem elektronischen Organ (16) und mit mindestens einer Antenne (14) versehen ist, die an einem Träger (18) des elektronischen Organs (16) befestigt ist, wobei die Antenne (14) einen freien Teil (26) bezüglich des Trägers (18) enthält, der an einen Befestigungsteil (24) der Antenne (14) am Träger (18) angrenzt, und
- eine so genannte Übergangsschicht (34),
wobei die Einheit (10) **dadurch gekennzeichnet ist, dass** die Übergangsschicht (34) eine Zusammensetzung enthält, die ein Elastomermaterial und 9 bis 13 Teile Schwefel für hundert Gewichtsteile Elastomermaterial enthält und mindestens die Verbindung (28) zwischen dem freien Teil (26) und dem Befestigungsteil (24) der Antenne (14) bedeckt.

2. Einheit (10) nach Anspruch 1, wobei die Zusammensetzung ein Harz enthält.

3. Einheit (10) nach Anspruch 1 oder 2, wobei die Zusammensetzung 3 bis 14 Teile Öl für hundert Gewichtsteile Elastomermaterial enthält.

4. Einheit (10) nach einem der vorhergehenden Ansprüche, wobei die Übergangsschicht (34) aus der Zusammensetzung besteht.

5. Einheit (10) nach einem der vorhergehenden Ansprüche, wobei die Übergangsschicht (34) die Gesamtheit der Antenne (14) bedeckt.

6. Einheit (10) nach einem der vorhergehenden Ansprüche, die eine Haftschicht (32) enthält, die zwischen die elektronische Vorrichtung (12) und die Übergangsschicht (34) eingefügt ist.

7. Einheit (10) nach einem der vorhergehenden Ansprüche, wobei die mittlere Dicke der Übergangsschicht (34) zwischen 1 mm und 1,5 mm und vorzugsweise zwischen 1 mm und 1,2 mm liegt.

8. Einheit (10) nach einem der vorhergehenden Ansprüche, die von einem Rohling des Luftreifens oder vom Luftreifen getrennt ist.

9. Luftreifenrohling, **dadurch gekennzeichnet, dass** er eine Einheit (10) nach einem der Ansprüche 1 bis 7 enthält.

10. Luftreifen, der enthält:
- eine elektronische Vorrichtung (12), die mit einem elektronischen Organ (16) und mit mindestens einer Antenne (14) versehen ist, die an einem Träger (18) des elektronischen Organs (16) befestigt ist, wobei die Antenne (14) einen freien Teil (26) bezüglich des Trägers (18) enthält, der an einen Befestigungsteil (24) der Antenne (14) am Träger (18) angrenzt, und
- eine so genannte Übergangsschicht (34), die mindestens die Verbindung (28) zwischen dem freien Teil (26) und dem Befestigungsteil (24) der Antenne (14) bedeckt,
wobei der Luftreifen **dadurch gekennzeichnet ist, dass** die Übergangsschicht (34) einen Gradienten des Schwefelgehalts aufweist.

## Claims

1. Electronic assembly (10) for installation in a tyre, comprising:
- an electronic device (12) having an electronic member (16) and at least one antenna (14) fixed to a support (18) of the electronic member (16), the antenna (14) comprising a part (26) which is free with respect to the support (18), joined to a part (24) for fixing the antenna (14) to the support (18), and
- a layer (34), called the transition layer,
the assembly (10) being **characterized in that** the transition layer (14) comprises a composition having an elastomer and 9 to 13 parts of sulphur per hundred parts by weight of elastomer, and covering at least the junction (28) between the free (26) and the fixing (24) parts of the antenna (14).

2. Assembly (10) according to Claim 1, wherein the composition comprises a resin.

3. Assembly (10) according to Claim 1 or 2, wherein the composition comprises 3 to 14 parts of oil per hundred parts by weight of elastomer.

4. Assembly (10) according to any of the preceding claims, wherein the transition layer (34) is made from the composition.

5. Assembly (10) according to any of the preceding claims, wherein the transition layer (34) covers the whole of the antenna (14).

6. Assembly (10) according to any of the preceding claims, comprising an adhesion layer (32) interposed between the electronic device (12) and the transition layer (34).

7. Assembly (10) according to any of the preceding claims, wherein the average thickness of the transition layer (34) is in the range from 1 mm to 1.5 mm, and preferably in the range from 1 mm to 1.2 mm.

8. Assembly (10) according to any of the preceding claims, separate from a green blank of the tyre or from the tyre.

9. Green tyre blank, **characterized in that** it comprises an assembly (10) according to any of Claims 1 to 7.

10. Tyre, comprising:
- an electronic device (12) having an electronic member (16) and at least one antenna (14) fixed to a support (18) of the electronic member (16), the antenna (14) comprising a part (26) which is free with respect to the support (18), joined to a part (24) for fixing the antenna (14) to the support (18), and
- a layer (34), called the transition layer, covering at least the junction (28) between the free (26) and the fixing (24) parts of the antenna (14),
the tyre being **characterized in that** the transition layer (34) comprises a gradient of the sulphur content.
